# EUROPEAN PATENT APPLICATION

(11) **EP 2 540 479 A1**
(43) Date of publication of application: **02.01.2013**
(21) Application number: 12173065.9
(22) Date of filing: 21.06.2012
(51) Int. Cl.: B29C 70/24, C04B 35/00, B29C 65/00

(54) **Reinforced composite T-joint**

(30) Priority: 29.06.2011 US 201113172345
(71) Applicant: United Technologies Corporation, Hartford, CT 06101 (US)
(72) Inventor: Jarmon, David C., Kensington, CT Connecticut 06037 (US); Croteau, Paul F., Columbia, CT Connecticut 06237 (US)
(74) Representative: Tomlinson, Kerry John

(57) **Abstract**

A T-joint in fiber reinforced ceramic matrix composites is strengthened by the insertion of monofilament fibers (40) in the joint.

## Description

### BACKGROUND

Fiber reinforced composite materials are being employed as replacements for metal components at an increasing pace in many industries including aerospace and automotive because of significant performance benefits. The benefits result from the exceptional combination of high stiffness, high strength, and low density that typically characterize fiber reinforced composite materials and from the ability to tailor the properties of each composite component to satisfy the requirements of each specific application. The efficiency of a gas turbine engine scales directly as the difference in inlet and exhaust temperature of the working fluid in the engine. For this reason, higher temperature lightweight materials are an industry focus. Fiber reinforced materials are being used to advantage in this aspect.

However, the inherent structural anisotropy in fiber reinforced composite materials offers distinct challenges to designers of joints and other structural connections. This is particularly evident in T-joints wherein a rib is attached to a platform or bulk head. Delamination and other structural weaknesses induced by operating loads are of concern.

### SUMMARY

A strengthened fiber reinforced composite T-joint is formed from two sheets by splitting one end of a first sheet and bending each of the two sides formed by the split into J-shapes, such that the sides form flanges and a fillet. A second sheet is bonded to the flanges to form a T-joint, and the fillet is filled with composite filler material. The T-joint is strengthened by monofilaments inserted in the first sheet and second sheet.

The present invention provides a T-joint comprising: a first woven fiber reinforced composite member comprising a rib portion and a pair of oppositely extending flanges; a second woven fiber reinforced composite member comprising a platform attached to the flanges; fiber reinforced composite filler material that substantially fills a fillet located between the flanges and the platform; and monofilament fibers protruding from the first member and penetrating at least one of the filler material and the second member.

In another aspect, the present invention provides a method of joining fiber reinforced composite members, the method comprising: forming a first woven fiber reinforced composite member having a rib portion and a pair of oppositely extending flanges; forming a second woven fiber reinforced composite member that comprises a platform; joining the second member to the flanges of the first member to form a T-joint; filling a fillet located between the flanges and the platform with woven fiber reinforced composite material; and reinforcing the T-joint with monofilament fibers that extend from the first member and penetrate at least one of the filler material and the second member.

Certain preferred embodiments will now be described by way of example only and with reference to the accompanying drawings.

### BRIEF DESCRIPTION OF THE DRAWINGS

FIG. 1A is an example of a related art T-joint fabricated from laminated 2-D woven plies.

FIG. 1B is an example of the T-joint in Fig. 1A with the void filled with a filler.

FIG. 2A is a schematic showing a rib pull test setup.

FIG. 2B is a photograph of interlaminer cracks formed during a pull test of a related art T-joint.

FIG. 3 is a photograph of interlaminer failure in a related art SiC/SiNC T-joint from pull testing.

FIG. 4A is an example of a related art T-joint preform with a flange fabricated from a 3-D woven composite.

FIG. 4B is an example of a related art 3-D woven T-joint containing a filler.

FIG. 5 is an example of a T-joint strengthened with vertical SiC monofilaments.

FIG. 6A is a side view of a flanged 3-D preform with SiC monofilaments woven in.

FIG. 6B is the A-A cross sectional view of FIG. 6A.

FIG. 6C illustrates the assembly of a vertically strengthened T-joint.

FIG. 6D illustrates the assembled vertically strengthened T-joint.

FIG. 7 is a photomicrograph of a dual fiber reinforced glass-ceramic composite.

FIG. 8 are stress strain curves of three fiber reinforced glass-ceramic matrix materials.

FIG. 9 is an example of a T-joint strengthened with angled vertical SiC monofilaments.

FIG. 10 is a T-joint strengthened with horizontal SiC monofilaments.

FIG. 11 is a T-joint strengthened with angled horizontal SiC monofilaments.

### DETAILED DESCRIPTION

Ceramic matrix composites (CMCs) are considered an enabling gas turbine and hypersonic engine material because of their high thermal-mechanical performance and low density compared to metal alloy and intermetallic materials. A basic feature that is often incorporated into composite components for attachment and/or stiffening is a T-joint.

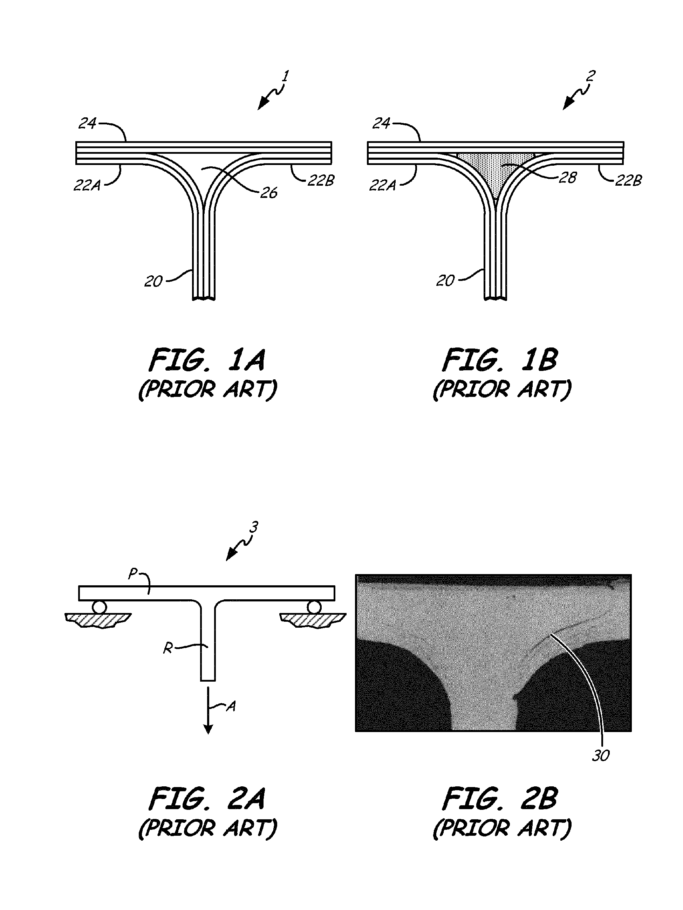

An example of related art T-joint 1 fabricated by a planar layup of 2-D plies and consolidation is shown in FIG. 1A. Related art T-joint 1 comprises planar rib 20 and flanges 22A and 22B joined to planar platform 24 wherein the attachment is by processes well known to those in the art. Void region 26 is created when adjacent plies are separated and curved to create the fillets and flanges 22A and 22B. Note also that a 3-D woven structure can be split to form the same T-joint structure, and is discussed later. A common method of eliminating void region 26 is to fill it with filler 28 as shown in T-joint 2 in FIG. 1B. A filler is a yarn filler and can be in the form of individual tows grouped, woven, or braided together. Rib 20 and platform 24 are two dimensional (2-D) fiber reinforced ceramic matrix composite (CMC) layups. T-joint 2 shown in FIG. 1B is like T-joint 1, but with filler 28 filling void region 26.

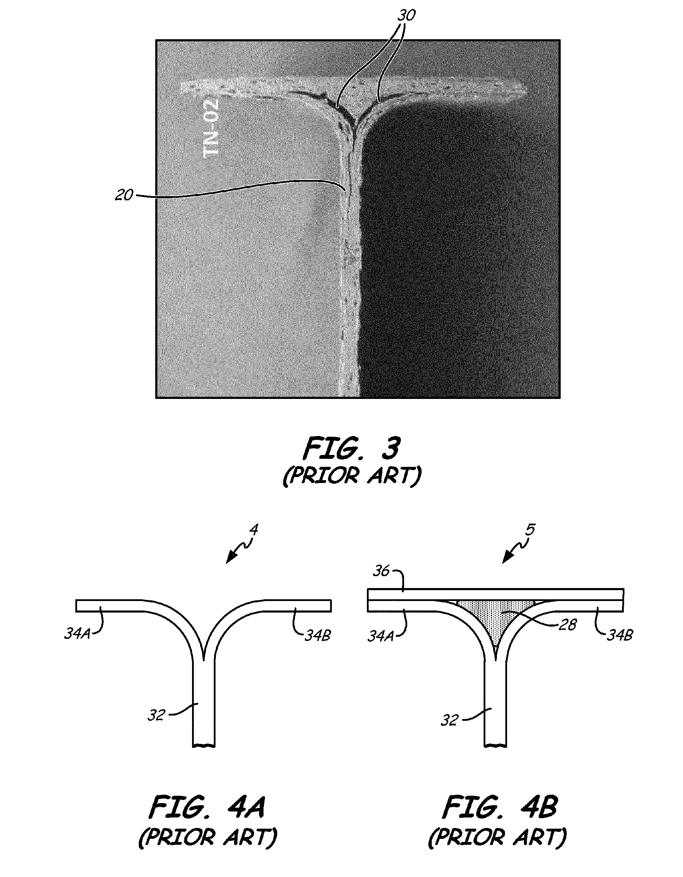

The strength properties of composite materials are anisotropic since they rely on the fibers to provide the primary load carrying capability. For laminated composites, the in-plane properties are generally an order of magnitude greater than the out of plane properties. For the traditional T-joints shown in FIGS. 1A and 1B, the critical design drivers are the interlaminar stresses at the intersection of rib 20 and platform 24 because of the lack of fiber reinforcement and the low interlaminar fiber/matrix properties. This was demonstrated in the early 1990s in pull testing of various CMC T-joints. (Miller, R. J. "Tee Subelement Analysis Test", 16^{th} Annual Conference on Composites, 1992). The pull test setup is illustrated in FIG. 2A wherein platform P of T-joint 3 is supported on each end and rib R is being pulled in direction of arrow A. The resulting failure mode for this test is interlaminar separation as shown in FIG. 2B by interlaminar fracture 30. Another example of extensive interlaminar fracture in a CMC T-joint after a rib pull test is shown in FIG. 3 wherein cracks 30 were generated.

An alternate way to reinforce a CMC T-joint is with a 3-D weave. A 3-D fiber architecture sheet can be woven which splits in half at one or both ends. In contrast to two dimensional woven fiber reinforced lay ups, three dimensional, thicker woven structures can be produced that do not have interlaminar zones that may delaminate as shown in Fig. 2B. T-joint preform 4 with 3-D woven preform 32 with flange elements 34A and 34B is shown in FIG. 4A. Flange elements 34A and 34B can support platform 36 as shown in FIG. 4B. If desired, filler 28 can be added to the platform to form T-joint 5 as shown in FIG. 4B. The 3-D reinforcement may have beneficial properties for a CMC T-joint, but it may not substantially, if at all, increase the interlaminar properties along the interface with the filler or 3-D platform preform.

An exemplary, but non-limiting embodiment of the invention comprises fiber reinforced ceramic matrix composites with SiC yarns in a silicon-nitrogen-carbon (SiNC) ceramic matrix. The SiC yarns are composed of multiple filaments and the diameter of each filament is typically in the range of 10-15 microns. The small filament diameter makes the yarn tows sufficiently flexible for weaving into fabrics and layups into complex shapes. In an embodiment of the invention, T-joints of the fiber reinforced ceramic matrix composite are strengthened by the insertion of 142 micron diameter SiC monofilament fibers into the T-joint in varying orientations depending on the anticipated loading experienced by the T-joint.

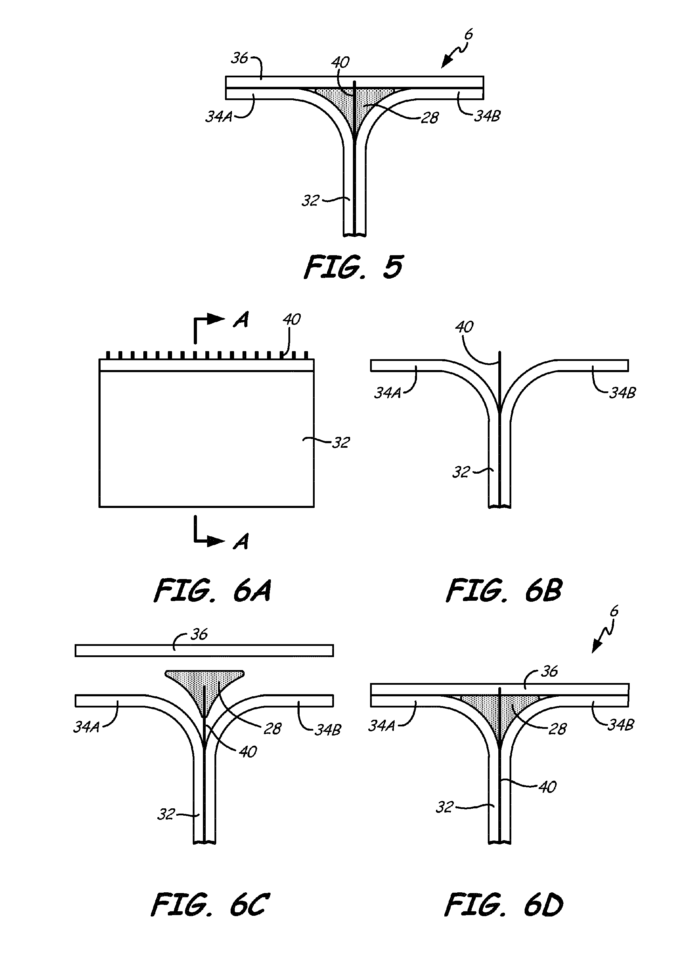

An example of the invention is shown in Fig. 5. In Fig. 5, T-joint 6 comprises rib 32, flanges 34A and 34B bonded to platform 36, with filler 28 filling the fillet space. Monofilament fiber 40 is inserted or woven into rib 32 such that it mechanically connects platform 36 to rib 30, thereby strengthening T-joint 6 against tensile loading such as that illustrated in Fig. 2A.

A method of fabricating T-joint 6 is shown in Figs. 6A-6D. A side view of planar rib 32 is shown in Fig. 6A. Vertical monofilament fibers 40 can be inserted into rib 32 or, if rib 32 is a 3-D woven body, the fibers can be woven into the rib preform. The advantage of the latter is that the monofilament fiber can run the full length of the rib to provide reinforcement and stiffness to the rib.

Cross section AA of rib 32 is shown in Fig. 6B. In Fig. 6A and 6B, fibers 40 are shown protruding above flanges 34A and 34B in order for them to penetrate platform 36 upon assembly. The disassembled T-joint is shown in Fig. 6C wherein platform 36 and noodle 28 are positioned for assembly. Fully assembled T-joint 6 is shown in Fig. 6D.

The present invention improves the strength and overall properties of ceramic matrix composite T-joints by incorporating monofilament fibers in the T-joint. Diameters of the monofilament fibers can range from 50 microns to 200 microns depending on requirements of the particular application. A preferred embodiment is SiC monofilament fibers but others known and not known in the art are applicable. Numerous CMC systems including SiC/SiC, melt infiltrated SiC/SiC, SiC/SiNC, SiC/glass, SiC/glass-ceramic, oxide/oxide and others known and not known in the art are applicable.

All embodiments of the invention are assumed herein to be equally applicable to all 2-D laminar, 3-D woven and other known and unknown fiber reinforced composite structural elements.

In embodiments, 142 micron diameter, SiC monofilament fibers are inserted in the rib, filler, and platform of T-joints to counteract delamination and other damage caused by loading of the joint. The selection of the reinforcement location for the SiC monofilaments will depend on the loading of the T-joint under consideration.

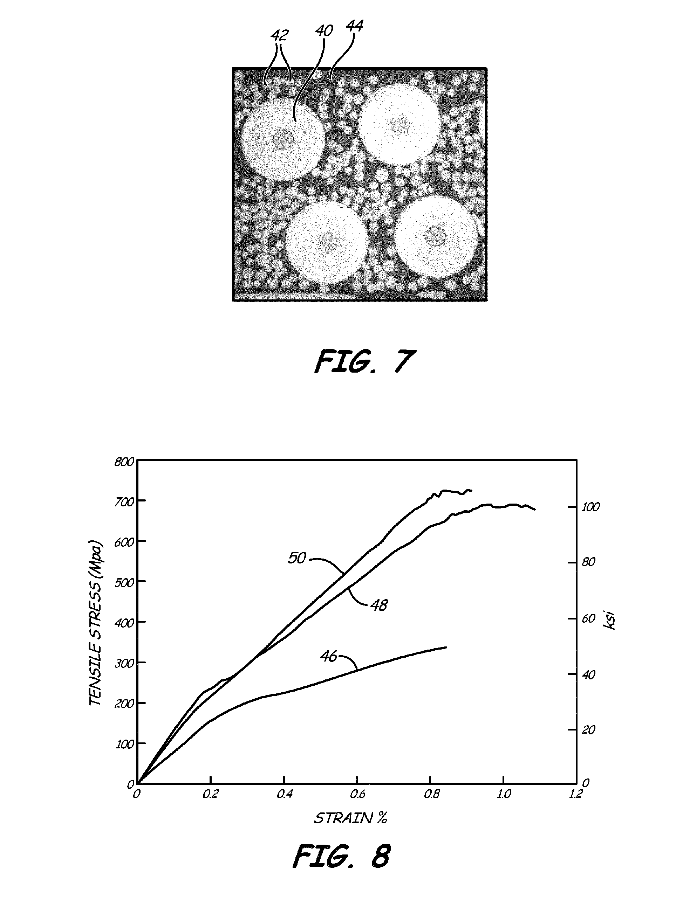

A photomicrograph of a polished cross section of a dual fiber reinforced glass-ceramic matrix composite is shown in FIG. 7. Monofilament 40 is a 142 micron SiC monofilament fiber. Yarn filler 42 is a SiC yarn. The fibers are encased by glass-ceramic matrix 44.

Dual SiC fiber reinforced glass-ceramic matrix composites have exceptionally high mechanical properties as shown in the stress versus strain curves of FIG. 8. Curve 46 shows the tensile properties of yarn alone. The beneficial effects of adding SiC monofilaments are shown by curves 48 and 50. Curve 48 shows the properties of a glass-ceramic matrix composite containing 40 wt. % SiC monofilament and 21 wt. % SiC yarn. Curve 50 is a glass-ceramic composite containing 46 wt. % SiC monofilament. Both materials exhibited ultimate tensile strengths exceeding 100 KSI.

Four embodiments are described here. The embodiments are only examples and are not to be taken as limitations of the invention.

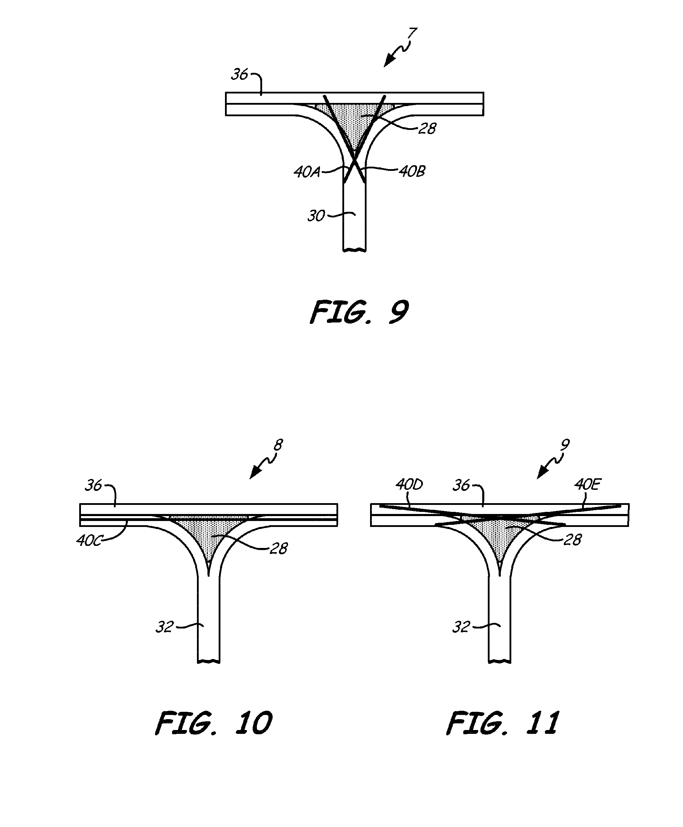

FIG. 9 illustrates T-joint embodiment 7 in which monofilaments 40A and 40B are positioned in angled vertical orientation to resist load transfer by shear from platform 36 to rib 30. This reinforcement is particularly effective in increasing the interlaminar shear strength.

FIG. 10 illustrates T-joint embodiment 8 in which monofilament 40C is in a horizontal position to resist flexural loading of platform 36.

FIG. 11 illustrates T-joint embodiment 9 in which monofilaments 40D and 40E are positioned in an angled horizontal orientation to resist load transfer by shear from platform 36 to rib 32.

Embodiments of this invention also include organic matrix composites wherein the organics include epoxy, polyimide, bismaleimide (BMI) and others known and not known in the art.

These and other embodiments may be adopted singularly or in combination to effect the mechanical integrity of T-joints under diverse loading conditions.

While the invention has been described with reference to an exemplary embodiment(s), it will be understood by those skilled in the art that various changes may be made and equivalents may be substituted for elements thereof without departing from the scope of the invention defined by the attached claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A T-joint comprising:
a first woven fiber reinforced composite member comprising a rib portion (32) and a pair of oppositely extending flanges (34A,34B);
a second woven fiber reinforced composite member comprising a platform (36) attached to the flanges;
fiber reinforced composite filler material (28) that substantially fills a fillet located between the flanges and the platform; and
monofilament fibers (40) protruding from the first member and penetrating at least one of the filler material and the second member.

2. The T-joint of claim 1, wherein the monofilament fibers (40) are woven or inserted into the first or second member.

3. The T-joint of claim 1 or 2, wherein the monofilament fibers (40) are SiC fibers.

4. The T-joint of claim 1, 2 or 3, wherein the first woven fiber reinforced composite member comprises a three dimensional composite structure, and/or wherein the first woven fiber reinforced composite member comprises a two dimensional multilayer structure.

5. The T-joint of any preceding claim, wherein the first and second woven fiber reinforced composite members comprise a fiber reinforced ceramic matrix composite, and/or wherein the first and second woven fiber reinforced composite members comprise a fiber reinforced organic matrix composite.

6. The T-joint of any preceding claim, wherein the monofilament fibers (40) have diameters of between 50 and 200 microns.

7. The T-joint of any preceding claim, wherein the monofilaments fibers (40) penetrate both the filler material and the second member.

8. The T-joint of any preceding claim, wherein the monofilament fibers (40) are oriented approximately perpendicular to a plane of the platform (36), and/or wherein the monofilament fibers (40) are oriented at an acute angle to the rib portion (32)

9. The T-joint of any preceding claim, wherein the monofilament fibers (40) are oriented at an obtuse angle to the rib portion (32).

10. The T-joint of any preceding claim, wherein the monofilament fibers (40) are oriented parallel to the platform (36).

11. The T-joint of any preceding claim, wherein the T-joint is a portion of a turbine, vane or other parts that could be used in a gas turbine engine.

12. A method of joining fiber reinforced composite members, the method comprising:
forming a first woven fiber reinforced composite member having a rib portion (32) and a pair of oppositely extending flanges (34A,34B);
forming a second woven fiber reinforced composite member that comprises a platform (36);
joining the second member to the flanges of the first member to form a T-joint;
filling a fillet located between the flanges and the platform with woven fiber reinforced composite material (28); and
reinforcing the T-joint with monofilament fibers (40) that extend from the first member and penetrate at least one of the filler material and the second member.

13. The method of claim 12, wherein the monofilament fibers (40) are SiC.

14. The method of claim 12 or 13, wherein the first and second woven composite members comprise a fiber reinforced ceramic matrix composite.

15. The method of claim 12, 13 or 14, wherein the monofilament fibers (40) are oriented approximately perpendicular to a plane of the platform (36); and/or wherein the monofilament fibers are oriented at an acute angle to the rib portion (32); and/or wherein the monofilament fibers are oriented at an obtuse angle to the rib portion; and/or wherein the monofilament fibers are oriented parallel to the platform.
